# EUROPÄISCHE PATENTANMELDUNG

(11) **EP 2 332 767 A1**
(43) Veröffentlichungstag der Anmeldung: **15.06.2011**
(21) Anmeldenummer: 10013792.6
(22) Anmeldetag: 20.10.2010
(51) Int. Cl.: B60K 26/02, B60W 30/18

(54) **Verfahren und Einrichtung zum manuellen Gasgeben bei Kraftfahrzeugen**

(30) Priorität: 10.12.2009 DE 102009057806
(71) Anmelder: Kempf, Martine, Sunnyvale CA 94086 (US)
(72) Erfinder: Kempf, Martine, Sunnyvale CA 94086 (US)
(74) Vertreter: von Puttkamer · Berngruber

(57) **Zusammenfassung**

Die Erfindung betrifft ein Verfahren und eine Einrichtung zum Gasgeben bei Kraftfahrzeugen mit einem manuell betätigbaren Stellglied und einem durch das Stellglied betätigbaren Gaspedal (4) sowie einem Rechner (3). Bei dem Stellglied kann es sich um einen an sich bekannten Gasring handeln. Es ist ein Geschwindigkeitssensor (2) vorgesehen, der die Geschwindigkeit des Kraftfahrzeuges ermittelt und ein entsprechendes Geschwindigkeitssignal (V) erzeugt. In dem Rechner (3)sind für unterschiedliche Geschwindigkeiten des Kraftfahrzeuges jeweils anzuwendende Übersetzungskurven (V1, V2, V3 - Vn) gespeichert, wobei jede Übersetzungskurve (V1, V2, V3 - Vn) eine jeweilige Übersetzung des Betätigungsgrades des Stellgliedes in den jeweiligen Hub des Gaspedals (4) wiedergibt. Der Rechner (3) wählt aufgrund des ihm vom Geschwindigkeitssensor (2) gelieferten Geschwindigkeitssignals (V) eine Übersetzungskurve (V1, V2, V3 - Vn) zur Betätigung des Gaspedals (4) mit dem dieser Übersetzungskurve (V1, V2, V3 - Vn) entsprechenden Hub aus.

## Beschreibung

Die vorliegende Erfindung betrifft ein Verfahren und eine Einrichtung zum manuellen Gasgeben bei Kraftfahrzeugen, insbesondere durch Behinderte.

Aus der DE 196 26 625 A1 geht eine derartige Einrichtung hervor. Diese weist einen manuell betätigbaren Handgasring auf, der konzentrisch zum kreisringförmigen Lenkrad eines Kraftfahrzeuges angeordnet ist und einen kleineren Durchmesser als das Lenkrad besitzt. Der Handgasring ist gegen die Kraft eines Energiespeichers bewegbar und wirkt auf ein Betätigungsorgan ein. Das Betätigungsorgan betätigt eine Steuerstange, die im Inneren der Lenksäule des Kraftfahrzeuges axial bewegbar angeordnet ist. Die Steuerstange wiederum betätigt das übliche Gaspedal des Kraftfahrzeuges.

Mit einer derartigen Einrichtung wird der Hub bzw. Niederdrückgrad des Handgasringes in eine Bewegung des Gaspedales mit einem vorbestimmten Hub bzw. Niederdrückgrad umgesetzt.

Üblicherweise beträgt der Hub des üblichen Gaspedals eines Kraftfahrzeuges beim Gasgeben vom Leerlauf zum Vollgas im Durchschnitt etwa 60 mm. Der Hub des Handgasringes beträgt dagegen beim Gasgeben vom Leerlauf zum Vollgas etwa 18 mm. Dies bedeutet, dass das Gasgeben, insbesondere beim Anfahren und der dabei erfolgenden Betätigung des Handgasringes, zu einem ruppigen und unpräzisen Anfahren führen kann. Dies wird sowohl vom Fahrer als auch von einem eventuellen Beifahrer als sehr unangenehm empfunden.

Die Aufgabe der vorliegenden Erfindung besteht darin, ein Verfahren und eine Einrichtung zum manuellen Gasgeben bei Kraftfahrzeugen so auszugestalten, dass insbesondere beim Anfahren aus dem Leerlauf heraus als unangenehm und als störend empfundene plötzliche Drehzahländerungen vermieden werden.

Diese Aufgabe wird durch eine Einrichtung zum Gasgeben bei Kraftfahrzeugen mit den Merkmalen des Patentanspruches 1 gelöst.

Der wesentliche Vorteil der vorliegenden Erfindung besteht darin, dass die genannten unerwünschten und als störend empfundenen Änderungen der Drehzahl beim manuellen Gasgeben, insbesondere beim Anfahren aus dem Leerlauf heraus, dadurch vermieden werden können, dass die Übersetzung vom Hub des Handgasringes zum Hub des Gaspedales automatisch in Abhängigkeit von der Geschwindigkeit des Kraftfahrzeuges verändert wird. Dadurch kann erreicht werden, dass bei einer relativ kleinen Geschwindigkeit des Kraftfahrzeuges eine Betätigung des Handgasringes mit einem relativ großen Hub zu einer Betätigung des Gaspedales mit einem relativ kleinen Hub führt, wohingegen bei einer relativ großen Geschwindigkeit des Kraftfahrzeuges der Hub des Handgasringes beinahe linear in den Hub des Gaspedales übersetzt wird. Dabei ist es von Bedeutung, dass bei jeder ermittelten Geschwindigkeit des Kraftfahrzeuges der volle Hub des Gaspedales vom Leerlauf bis zum Vollgas mit dem möglichen Hub des Handgasringes immer erreicht werden kann.

Mit der vorliegenden Erfindung sind die folgenden weiteren Vorteile erreichbar. Neben dem sanften Anfahren, das leicht und einfach erreicht werden kann, kann das Einparken und Rückwärtsfahren sicher und angenehm erfolgen. Das Fahren im Straßenverkehr ist vorteilhafterweise ökonomisch, da kein ruckartiges Gasgeben mehr zu verzeichnen ist. Bei schnellerem Fahren braucht der Handgasring zum Gasgeben nur weniger gedrückt zu werden als beim langsamen Fahren. Der Fahrer behält daher eine angenehme und ergonomische Position seiner Hände bei. Überhohlmanöver mit schnellen Geschwindigkeiten können präzise und einfach durchgeführt werden, da der Handgasring eine direktere Übersetzung zum Gaspedal hat. Insgesamt kann gesagt werden, dass die Fahrsicherheit vorteilhafterweise durch die geschwindigkeitsabhängige Betätigung des Handgasringes und des Gaspedales in allen Situationen und bei jeder Geschwindigkeit deutlich erhöht wird.

Vorteilhafterweise kann die von der Geschwindigkeit des Kraftfahrzeuges abhängige Übersetzung des Hubes des Handgasringes in den Hub des Gaspedals für verschiedene Fahrzeugmodelle variiert und optimiert werden.

Vorteilhafte Ausgestaltungen der Erfindung gehen aus den Unteransprüchen hervor.

Im Folgenden werden die Erfindung und deren Ausgestaltungen im Zusammenhang mit den Figuren näher erläutert. Es zeigen:
- Figur 1: in schematischer Darstellung ein Blockschaltbild der erfindungsgemäßen Einrichtung zum Gasgeben bei Kraftfahrzeugen und
- Figur 2: ein Diagramm zur Erläuterung beispielhafter Übersetzungen des Hubes des manuell betätigbaren Handgasringes in den Hub eines üblichen Gaspedals.

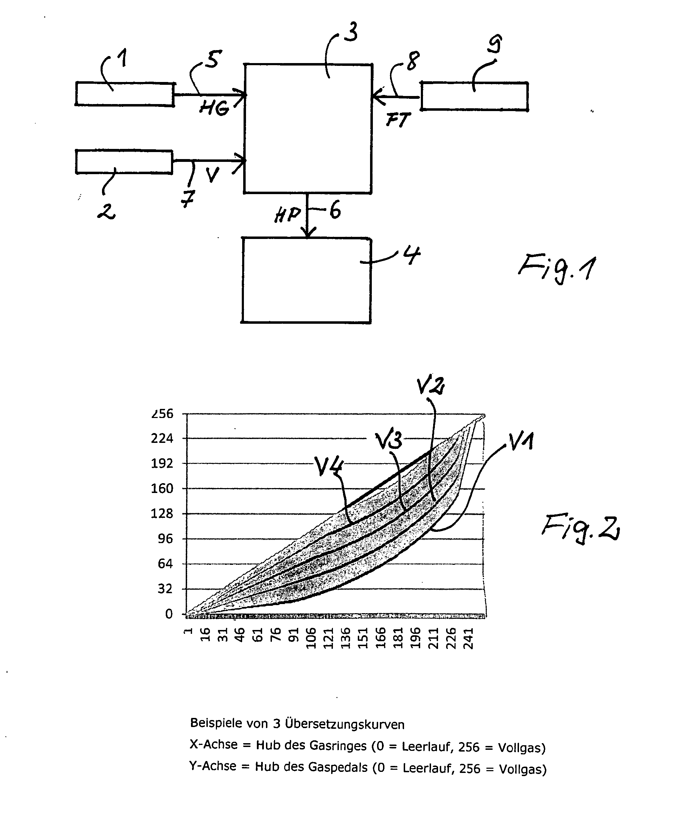

Gemäß Figur 1 umfasst die vorliegende Einrichtung zum Gasgeben bei Kraftfahrzeugen, insbesondere durch im wesentlichen einen manuell betätigbaren Gasring 1, einen Rechner 3, einen Geschwindigkeitssensor 2 und ein Gaspedal 4. Der Gasring 1 ist, wie bekannt, vorzugsweise im Inneren des ringförmigen Lenkrades des Kraftfahrzeuges angeordnet. Er besitzt zweckmäßigerweise einen Durchmesser, der kleiner ist als derjenige des Lenkrades. Beim Niederdrücken des Gasringes 1 in der axialen Richtung der Lenksäule des Lenkrades wird an einer Leitung 5 ein dem Niederdrückgrad bzw. dem entsprechenden Hub des Gasringes 1 entsprechendes Ausgangssignal HG erzeugt. Dieses Ausgangssignal HG wird zum Rechner 3 übertragen. Der Rechner 3 kann an seiner Ausgangsleitung 6 ein Stellsignal HP zur Betätigung des Gaspedales 4 mit einem vom Rechner 3 bestimmten Hub erzeugen.

Da, wie eingangs bereits erläutert, die Betätigung des Gaspedales 4 in Abhängigkeit von der Geschwindigkeit des Kraftfahrzeuges erfolgen soll, wird die Geschwindigkeit des Fahrzeuges mit der Hilfe eines Geschwindigkeitssensors 2 erfasst, der über seine Ausgangsleitung 7 ein entsprechendes Geschwindigkeitssignal V an den Rechner 3 liefert.

In einem Speicher des Rechners 3 sind so genannte Übersetzungskurven gespeichert, die für unterschiedliche Geschwindigkeiten des Kraftfahrzeuges anzuwenden sind. Dabei bestimmen diese Übersetzungskurven bei unterschiedlichen Geschwindigkeiten die jeweiligen Übersetzungen des Hubes des Handgasringes 1 in den jeweiligen Hub des Gaspedals 4

In der Figur 2 sind derartige Übersetzungskurven V1, V2, V3 ... Vn dargestellt, wobei auf der x-Achse der Hub des Handgasringes 1 und auf der y-Achse der Hub des Gaspedales 4 dargestellt sind. Es ist erkennbar, dass bei kleinen Geschwindigkeiten (z.B. V1) ein größerer Hub bzw. Niederdrückgrad des Handgasringes 1 zu einem kleineren Hub bzw. Niederdrückgrad des Gaspedales 4 führt, während bei einer größeren Geschwindigkeit (z.B. V3) des Kraftfahrzeuges derselbe Hub bzw. dasselbe Niederdrückgrad des Handgasringes 1 zu einem größeren Hub bzw. Niederdrückgrad des Gaspedales 4 führt. Dies bedeutet, dass bei einer tatsächlichen Geschwindigkeit des Kraftfahrzeuges, die vom Geschwindigkeitssensor 2 ermittelt wird, der Rechner 3 aufgrund des ihm zur Verfügung gestellten Geschwindigkeitssignales V eine entsprechende Übertragungsfunktion aus seinem Speicher auswählt und in Abhängigkeit von dieser Übertragungsfunktion die Übersetzung zwischen dem Niederdrückgrad des Handgasringes 1 und dem Gaspedal 4 bestimmt. Es ist erkennbar, dass bei hohen Geschwindigkeiten des Kraftfahrzeuges eine mehr lineare Abhängigkeit zwischen dem Niederdrückgrad des Handgasringes 1 und dem Niederdrückgrad des Gaspedales 4 besteht.

Es wird darauf hingewiesen, dass anstelle des erläuterten Handgasringes 1 auch ein beliebig anderes, z.B. manuell von einem Körperbehinderten, betätigbares Stellglied bzw. ein manuell betätigbarer Gasgeber vorgesehen sein kann. Das Gaspedal 4 wird vorzugsweise mechanisch oder elektromotorisch aufgrund des ihm an der Leitung 6 vom Rechner 3 zur Verfügung gestellten Stellsignals HP betätigt. Wenn ein Kraftfahrzeug ein so genanntes elektronisches Gaspedal 4 besitzt, das von elektronischen Signalen betätigt wird, die von einer Recheneinrichtung des Kraftfahrzeuges erzeugt werden, ist es auch denkbar, dass der beschriebene Rechner 3 die von ihm erzeugten Stellsignale HP direkt an die Recheneinrichtung des Kraftfahrzeuges liefert. Es ist ferner auch denkbar, anstelle der Betätigung eines Gaspedales 4, durch das an der Leitung 6 zur Verfügung gestellte Stellsignal HP direkt das Drosselventil des Kraftfahrzeuges zu betätigen.

Bei dem Geschwindigkeitssensor 2 kann es sich um einen Sensor handeln, der ein Geschwindigkeitssignal von der Tachowelle ableitet oder die Geschwindigkeit bzw.

Drehzahl der Radachsen misst. Es ist auch denkbar, dass der Geschwindigkeitssensor elektronische Signale auswertet, die an Feldbussen, beispielsweise an dem CAN-bus oder an dem OBD2-Diganosestecker oder einem anderen Diagnosestecker des Kraftfahrzeuges zur Verfügung stehen.

Es ist ferner möglich, bei einer Ausgestaltung der vorliegenden Einrichtung die Übersetzungskurven V1, V2, V3 ... Vn auch in Abhängigkeit von dem jeweiligen Fahrzugtyp bzw. -modell zu variieren. Zu diesem Zweck kann ein Glied 9 vorgesehen sein, das über eine Leitung 8 ein dem Fahrzeugtyp entsprechendes Signal FT an den Rechner 3 liefert.

### Bezugszeichen:

- 1: Handgasring
- 2: Geschwindigkeitssensor
- 3: Rechner
- 4: Gaspedal
- 5: Leitung
- 6: Leitung
- 7: Leitung
- 8: Leitung
- 9: Glied zur Eingabe des Fahrzeugtyps
- HG: Ausgangssignal
- V: Geschwindigkeitssignal
- HP: Stellsignal
- FT: Signal (Fahrzeugtyp)
- V1,: V2, V3 - Vn Korrektursignal

## Patentansprüche

1. Verfahren zum Gasgeben bei Kraftfahrzeugen mit einem manuell betätigbaren Stellglied und einem durch das Stellglied betätigbaren Gaspedal (4) sowie einem Rechner (3), **dadurch gekennzeichnet, dass** ein Geschwindigkeitssensor (2) vorgesehen wird, der die Geschwindigkeit des Kraftfahrzeuges ermittelt und ein entsprechendes Geschwindigkeitssignal (V) erzeugt, dass in dem Rechner (3) für unterschiedliche Geschwindigkeiten des Kraftfahrzeuges jeweils anzuwendende Übersetzungskurven (V1, V2, V3 - Vn) gespeichert werden, wobei jede Übersetzungskurve (V1, V2, V3 - Vn) eine jeweilige Übersetzung des Betätigungsgrades des Stellgliedes in den jeweiligen Hub des Gaspedals (4) wiedergibt, und dass der Rechner (3) aufgrund des ihm vom Geschwindigkeitssensor (2) gelieferten Geschwindigkeitssignals (V) eine Übersetzungskurve (V1, V2, V3 - Vn) zur Betätigung des Gaspedals (4) mit dem dieser Übersetzungskurve (V1, V2, V3 - Vn) entsprechenden Hub auswählt.

2. Einrichtung zur Durchführung des Verfahrens nach Anspruch 1, **dadurch gekennzeichnet, dass** das Kraftfahrzeug ein manuell betätigbares Stellglied und ein durch das Stellglied betätigbares Gaspedal (4) sowie einen Rechner (3) aufweist, dass ferner ein Geschwindigkeitssensor (2) zur Ermittlung der Geschwindigkeit des Kraftfahrzeuges und zur Erzeugung eines entsprechenden Geschwindigkeitssignals (V) vorgesehen ist, dass in dem Rechner (3) für unterschiedliche Geschwindigkeiten des Kraftfahrzeuges jeweils anzuwendende Übersetzungskurven (V1, V2, V3 - Vn) gespeichert sind, wobei jede Übersetzungskurve (V1, V2, V3 - Vn) eine jeweilige Übersetzung des Betätigungsgrades des Stellgliedes in den jeweiligen Hub des Gaspedals (4) wiedergibt, und dass durch den Rechner (3) aufgrund des ihm vom Geschwindigkeitssensor (2) gelieferten Geschwindigkeitssignals (V) eine Übersetzungskurve (V1, V2, V3 - Vn) zur Betätigung des Gaspedals (4) mit dem dieser Übersetzungskurve (V1, V2, V3 - Vn) entsprechenden Hub auswählbar ist.

3. Einrichtung nach Anspruch 2, **dadurch gekennzeichnet, dass** das Stellglied ein manuell betätigbarer Gasring (1) ist, wobei beim Niederdrücken des Gasringes (1) ein dem Niederdrückgrad des Gasringes (1) entsprechendes Ausgangssignal (HG) erzeugbar und an den Rechner (3) übertragbar ist.

4. Einrichtung nach Anspruch 2 oder 3, **dadurch gekennzeichnet, dass** die in dem Rechner (3) gespeicherten Übersetzungskurven (V1, V2, V3 - Vn) derart gestaltet sind, dass bei kleineren Geschwindigkeiten des Kraftfahrzeuges ein größerer Niederdrückgrad des Stellgliedes zu einem kleineren Niederdrückgrad des Gaspedales (4) führt, während bei einer größeren Geschwindigkeit des Kraftfahrzeuges derselbe Niederdrückgrad des Stellgliedes zu einem vergleichsweise größeren Niederdrückgrad des Gaspedales (4) führt.

5. Einrichtung nach einem der Ansprüche 1 bis 4, **dadurch gekennzeichnet, dass** der Geschwindigkeitssensor (2) das Geschwindigkeitssignal (V) in Abhängigkeit von der Drehung der Tachowelle des Kraftfahrzeuges ableitet.

6. Einrichtung nach einem der Ansprüche 1 bis 4, **dadurch gekennzeichnet, dass** der Geschwindigkeitssensor (2) das Geschwindigkeitssignal (V) in Abhängigkeit von der Drehzahl einer Radachse des Kraftfahrzeuges ermittelt.

7. Einrichtung nach einem der Ansprüche 1 bis 4, **dadurch gekennzeichnet, dass** der Geschwindigkeitssensor (2) das Geschwindigkeitssignal aus elektronischen Signalen ableitet, die an einem Feldbus des Kraftfahrzeuges, vorzugsweise an dem CAN-Bus, oder einem Diagnosestecker des Kraftfahrzeuges zur Verfügung stehen.

8. Einrichtung nach einem der Ansprüche 1 bis 7, **dadurch gekennzeichnet, dass** die in dem Rechner (3) gespeicherten Übersetzungskurven (V1, V2, V3 - Vn) in Abhängigkeit von dem jeweiligen Typ des Kraftfahrzeuges variieren.

9. Einrichtung nach einem der Ansprüche 1 bis 8, **dadurch gekennzeichnet, dass** das Gaspedal (4) ein durch den Fuß des Kraftfahrers betätigbares Gaspedal ist.

10. Einrichtung nach einem der Ansprüche 1 bis 8, **dadurch gekennzeichnet, dass** das Gaspedal ein durch eine Recheneinrichtung des Kraftfahrzeuges gesteuertes elektronisches Gaspedal ist, wobei die Recheneinrichtung den Rechner (3) bildet.
